**Europäisches Patentamt**

(19) **European Patent Office**

**Office européen des brevets**

(11) Publication number : **0 350 564 B1**

## (12) EUROPEAN PATENT SPECIFICATION

(45) Date of publication of patent specification :
**13.05.92 Bulletin 92/20**

(51) Int. Cl.⁵ : **A23L 3/00, A61L 2/12**

(21) Application number : **89104212.9**

(22) Date of filing : **09.03.89**

(54) **An apparatus for thermally stabilizing pre-packaged food articles.**

(30) Priority : **13.07.88 IT 2134188**

(43) Date of publication of application :
**17.01.90 Bulletin 90/03**

(45) Publication of the grant of the patent :
**13.05.92 Bulletin 92/20**

(84) Designated Contracting States :
**AT BE CH DE ES FR GB GR IT LI LU NL SE**

(56) References cited :
**EP-A- 0 287 760**
**DE-A- 3 430 673**
**DE-A- 3 447 544**
**US-A- 3 889 009**

(73) Proprietor : **BARILLA G. E R. F.LLI - Società
per Azioni
Viale Riccardo Barilla, 3/A
I-43100 Parma (IT)**

(72) Inventor : **Ferrari, Claudio
Via Portella delle Ginestre
I-42100 Reggio Emilia (IT)**
Inventor : **Caselli, Oreste
Via Motta, 10
I-42100 Reggio Emilia (IT)**

(74) Representative : **Vannini, Torquato et al
JACOBACCI-CASETTA & PERANI S.p.A. 7 Via
Visconti di Modrone
I-20122 Milan (IT)**

EP 0 350 564 B1

## Description

This invention relates to an apparatus for thermally stabilizing pre-packaged food articles. In particular, the invention concerns an apparatus for thermally stabilizing, on a continuous basis by means of microwaves, pre-packaged food articles sealed within containers which are at least partially transparent to microwaves.

More specifically, though not exclusively, the apparatus of this invention is advantageously applicable to continuous thermal stabilization of precooked food articles, with or without fillings, seasoning, sauces, and the like, as packaged and sealed off in containers of the tray type which are at least partially transparent to microwaves.

In order to impart generic food articles, and specifically stuffed or plain, newly made or precooked or part-cooked, or dried pasta articles, with good preservation qualities and extended shelf life, a requisite is that the enzymes present be deactivated, that the growth of micro-organisms be inhibited and their content reduced substantially, or even that all the micro-organisms present be killed.

A suitable thermal treatment of the food articles, as carried out at temperature levels and for duration times selected to suit expected results, e.g. at 80°C for pasteurization and 120° to 130°C for sterilization, represents the most widely used and, still today in a majority of cases, reliable of the conventional techniques available for the purpose.

However, that technique has always been beset with a serious drawback tied to the very temperature/time parameters that are known to significantly affect the organoleptic and nutritional properties of food articles subjected to thermal treatment.

This drawback is enhanced where the food articles are packaged and sealed within respective containers because, to make sure that the core portion of an article in a container can reach the predetermined treatment temperature, the peripheral portions thereof, that is the portions adjoining the container walls, are bound to exceed the predetermined temperature and to to remain under that critical condition even for a relatively long time period.

Further, an organoleptic and nutritional degradation in the peripheral portions of the article is unavoidable.

Toward overcoming said drawback, a factual technical contribution has come from the use of electromagnetic energy (microwaves) affording fast-rate heating of the food articles even up to relatively high temperature levels, such as may be required for their sterilization, i.e. in the region of 120-130°C.

An ability to significantly shorten the residence times of food articles under high temperature conditions constitutes in many case a resolving factor from the standpoint of preservation of their organoleptic properties.

But the use of microwaves also brings about drawbacks which cannot be easily obviated, nor have been obviated, in fact, due basically to uneven heating of the article originating from the very nature of microwaves, the temperature increase sought (the higher the temperature increase the more uneven becomes the article heating), the chemio-physical characteristics of the article (e.g. the higher is the moisture content the less uniform is the heating thereof), the geometrical features of the article itself, with due consideration also to its density and to the progressive loss of energy of the impinging microwaves.

That uneven heating is particularly evident, moreover, where the packaging containers are in tray form, because a food article so packaged is nearly always apt to develop an adverse "edge effect", that is, the article tends to be burned at the tray edges before its core can reach the desired temperature. This drawback is serious enough to impair a fast heating rate.

In an attempt at overcoming the above drawback, it has been proposed of using a special container, basically in box-like sheath form, to be fitted over a respective tray, which container has metallized side walls formed with a suitable pattern of slots which allow the microwaves to propagate toward and through the article in such a tray.

In essence, this prior proposal is directed to provide a small multimodal chamber capable of abating the direct wave, and in which a single package could be treated.

Containers made in accordance with said prior proposal have found widespread and beneficial application at household level, but cannot be utilized as such on a commercial scale on account of their low efficiency both in terms of energy requirements and temperature uniformity providing high reflectivity, with the attendant risk of seriously damaging the microwave generators, and because they bring about a low number of modes within the package resulting in attenuation of the excessive article heating along the edges of the tray container but with the risk of transferring the problem to another area of the article packaged in the tray, and not least, because they would be markedly uneconomical.

The problem underlying this invention is to provide an appartus whereby thermal stabilization can be carried out on an industrial scale by means of microwaves on food articles sealed within packages which are transparent to microwaves, in particular packages of the tray type, thus obviating the above-noted technical drawbacks.

This problem is solved, according to the invention, by an apparatus including a microwave treatment tunnel and a conveyor for taking said packages through said tunnel from an inlet port to an outlet port thereof, and characterized in that the conveyor has a plurality of recesses shaped to match the shape of said packages and having a side wall made of a metal or metal alloy exhibiting high electrical conductivity and low magnetic permeability, such as aluminum and copper.

In the instance of tray-shaped packages, as particularly comprehended by this invention, the side wall of each recess should mate, in close contact relationship, with the side wall of a corresponding tray all along the perimeter of the latter.

According to an aspect of this invention, said conveyor is of the endless belt type provided with a plurality of apertures regularly arranged in rows lying longitudinally of said belt, each aperture having its periphery encircled by an edge formation attached to, and jutting out from, said belt and made of a metal or metal alloy exhibiting high thermal conductivity and low magnetic permeability, such as aluminum and copper.

In another embodiment of the invention, said conveyor includes a plurality of substantially plate-like frames, structurally independent of one another, which are supported for sliding movement on guides mounted lengthwise within said microwave treatment tunnel, each frame being formed with a plurality of said recesses having a side wall made of a metal or metal alloy exhibiting high electrical conductivity and low magnetic permeability, such as aluminum and copper.

The apertures in said conveyor belt, surrounded peripherally by edges from such a metal, as well as the recesses in the plate-like frames, are shaped to substantially match the shape of food article packages to be treated, thereby to receive them in close contact relationship with the package side walls and all around the peripmeter thereof.

The features and advantages of an apparatus according to the invention will be more clearly understood by making reference to the following detailed description of some embodiments thereof, to be taken in conjunction with the accompanying illustrative and non-limitative drawings, where:

Figure 1 is a longitudinal section view showing in diagramatic form an apparatus for thermally stabilizing food articles, according to the invention;

Figure 2 is a diagramatic sectional view taken across the apparatus shown in Figure 1;

Figures 3 and 3a are a top plan view and cross-sectional view, respectively, of a detail from the preceding Figures;

Figure 4 shows, again in diagramatic form only, a conveyor employed in the thermal stabilization apparatus of this invention, according to a modified embodiment thereof; and

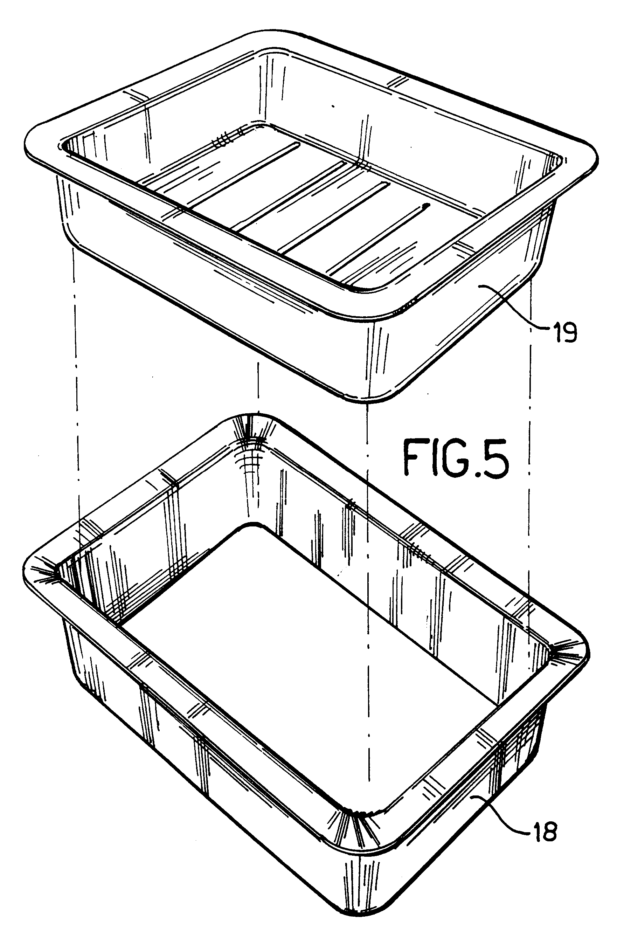

Figure 5 is a perspective detail view of the conveyor shown in Figure 4.

With reference to the drawing views, an apparatus for thermally stabilizing food articles sealed within respective packages, for example and preferably packages of the tray type, comprises a microwave treatment tunnel 1 having an inlet port 2 and an outlet port 3 equipped with respective closure means 4, 5. The treatment tunnel 1 is provided with a plurality of microwave generators, collectively designated 6, which are scattered along said tunnel in a predetermined arrangement.

A conveyor for said tray packages, generally designated 7, traverses the treatment tunnel 1 from the inlet port 2 to the outlet port 3 thereof.

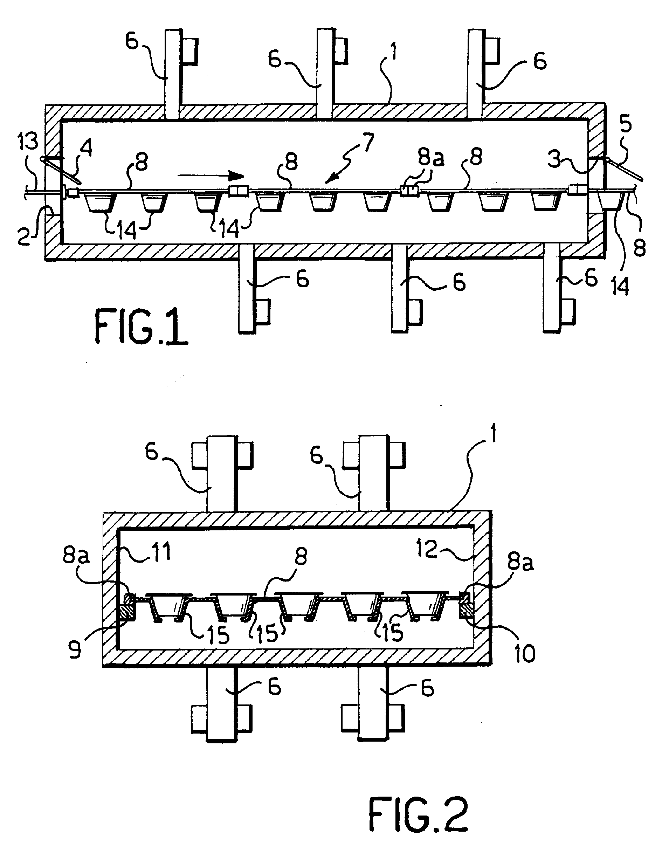

In accordance with a preferred, though not exclusive, embodiment, the conveyor 7 includes a plurality of plate-like frames 8 which are structurally independent of one another and supported, in a manner to be described, on guides 9, 10 (Figure 2) which are mounted lengthwise on opposed inner walls 11, 12 of said treatment tunnel 1.

The plurality of frames 8 are caused to advance along said guides 9, 10 through the treatment tunnel 1 by a pusher arrangement using pushing devices known per se and schematically indicated at 13 in Figure 1.

Each frame 8 comprises a plurality of recesses, collectively designated 14, which are regularly laid in rows extending lengthwise to said frame. The recesses 14 are shaped to match the shape, e.g. tray-like, of the packages wherein the articles to be treated through the tunnel 1 are sealed. Each of said recesses 14 has side walls, and only the side walls indicated at 15 in Figure 2, made of a metal or metal alloy exhibiting high electrical conductivity and low magnetic permeability, such as aluminum and copper. Aluminum is the preferred metal.

Preferably, and in accordance with a characteristic aspect of this invention, each frame 8 is composed of an aluminum plate of a predetermined thickness in which there are formed, by conventional techniques and operations, the plural recesses 14, each recess having an open bottom. The plate-like frames 8, made of aluminum throughout, are surrounded peripherally by a ledge 8a made of an insulating material, preferably of a polytetrafluoroethylene resin, said ledge 8a having such dimensions as to allow the frame 8 to bear on and slide along the guides 9 and 10 in the treatment tunnel 1.

In another embodiment of this invention, the frame 8 is formed from an insulating material, transparent to microwaves, and with a plurality of apertures 16, which are laid regularly into rows as previously mentioned in connection with the recesses 14 and surrounded peripherally by respective edges 17 secured on, and projecting from, said frame 8 and made of aluminum or some other metal or metal alloy having high electrical conductivity and low magnetic permeability.

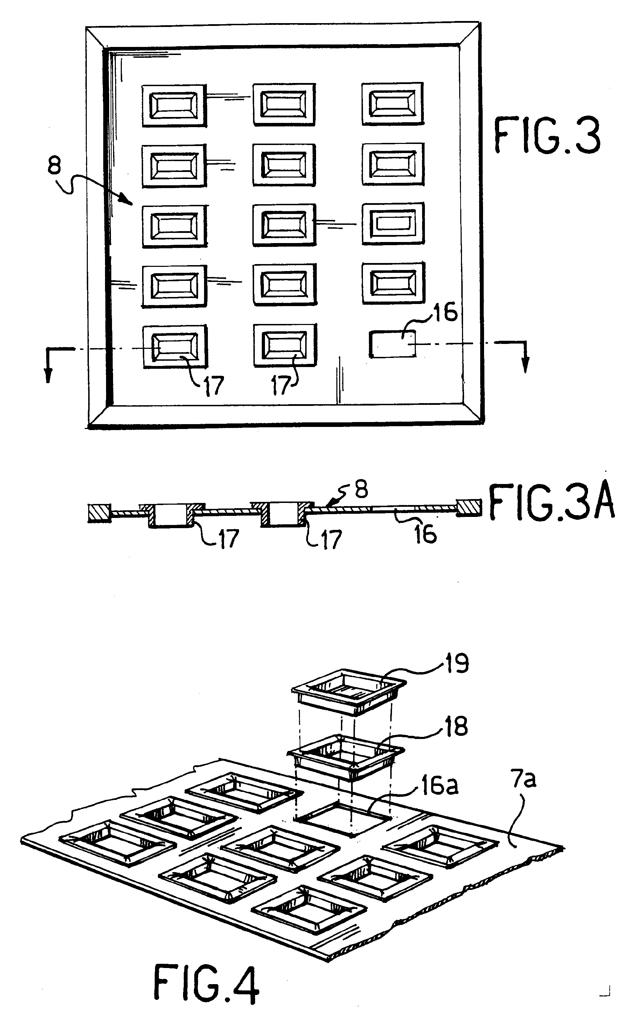

In a further embodiment (Figure 4), the conveyor 7 is of the endless belt, 7a, type formed with a plurality of apertures 16a regularly arranged into rows extending longitudinally of the belt. Each of these apertures 16a is surrounded peripherally by an edge 18 secured on, and protruding from, said belt, it being also formed from aluminum or some other metal or metal alloy having high electrical conductivity and low magnetic permeability. Said edges 18 are configured ring-like and have suitable shape and dimensions to mate in close contact with the side walls of the packages 19, such as a tray, in which the articles to be treated are sealed.

Inside the treatment tunnel 1, the microwave generators 6 create an electromagnetic field of predetermined strength, and the heating of pre-packaged food articles entrained through said tunnel 1 is due solely to the electric component E of said electromagnetic field. At the locations of the ring-like aluminum edges 18, or the side walls of said recesses 14, or the aluminum edges 16a of the above-noted frames 8, the tangential components of the electric field vector E may be cancelled. Thus, assuming an isotropic field in the proximities of a conductor (aluminum), and in view of the latter being set close against the article being treated, a significant decrease on the order of 60% of the heating temperature is made possible.

In this way, the drawbacks mentioned herein before in connection with the background art, and known by the term "edge effect", can be obviated, that is, it becomes possible to provide at one time a uniform distribution of heat and temperature through an article being treated through the tunnel 1 of this invention. Stabilization (heating) treatment tests have been carried out on pre-packaged food articles sealed within tray containers transparent to microwaves, which were driven through the treatment tunnel 1 while positioned in respective recesses 14 in a frame 8 of the kind described above. The results were compared to those obtained by subjecting to a similar microwave treatment the same food articles as packaged in like trays, which were driven through the tunnel 1 on a conventional conveyor, also transparent to microwaves.

For each tray, the article temperatures were measured both at the corner and core regions thereof.

The results of these tests are shown in the following Tables.

## TABLE 1

| Tray No. | Temperature (°C) with frame | | | | | Temperature (°C) without frame | | | | | Maximum variation (°C) with frame | without frame |
|---|---|---|---|---|---|---|---|---|---|---|---|---|
| | a | b | c | d | e | a | b | c | d | e | | |
| 1 | 65 | 60 | 60 | 60 | 62 | 68 | 66 | 46 | 71 | 74 | 5 | 28 |
| 2 | 64 | 54 | 59 | 59 | 58 | 72 | 58 | 40 | 60 | 67 | 10 | 32 |
| 3 | 66 | 65 | 64 | 66 | 63 | 57 | 55 | 38 | 59 | 60 | 3 | 22 |
| 4 | 56 | 55 | 60 | 57 | 56 | 61 | 64 | 39 | 57 | 57 | 4 | 25 |
| 5 | 60 | 55 | 60 | 57 | 56 | 54 | 51 | 45 | 63 | 54 | 4 | 18 |
| 6 | 60 | 60 | 60 | 60 | 61 | 66 | 70 | 54 | 57 | 70 | 1 | 16 |

Arithmetical Mean Values

| | a | b | c | d | e | a | b | c | d | e |
|---|---|---|---|---|---|---|---|---|---|---|
| | 62 | 58 | 60 | 60 | 60 | 63 | 60 | 44 | 61 | 63 |

EP 0 350 564 B1

TABLE 2

| Tray No. | Average temperature (°C) with frame | Average temperature (°C) without frame | Quadratic mean variation with frame | without frame |
|---|---|---|---|---|
| 1 | 61 | 65 | .95 | 4.42 |
| 2 | 59 | 59 | 1.43 | 4.9 |
| 3 | 65 | 54 | .50 | 4.8 |
| 4 | 57 | 53 | .77 | 3.8 |
| 5 | 57 | 53 | .95 | 3.0 |
| 6 | 60 | 58 | 1.07 | 4.07 |
| Mean Values | 60.4 | 58.4 | .945 | 4.07 |

EP 0 350 564 B1

It may be appreciated from the foregoing that the ratio of the square mean variations in the temperature distributions through the individual trays is on the average more favorable with a framed conveyor according to the invention by a factor of four.

## Claims

1. An apparatus for thermally stabilizing, on a continuous basis by means of microwaves, pre-packaged food articles sealed within containers which are at least partially transparent to microwaves, in particular packages of the tray type, including a microwave treatment tunnel (1) and a conveyor (7) for taking said packages through said tunnel (1) from an inlet port (2) to an outlet port (3) thereof, characterized in that the conveyor (7) has a plurality of recesses (14) shaped to match the shape of said packages (19) and having a side wall (15) made of a metal or metal alloy exhibiting high electrical conductivity and low magnetic permeability, such as aluminum and copper.

2. An apparatus according to Claim 1, characterized in that said conveyor (7) is of the endless belt type provided with a plurality of apertures (16a) regularly arranged in rows lying longitudinally of said belt, each aperture (16a) having its periphery encircled by an edge formation (18) attached to, and jutting out from, said conveyor belt (7) and made of a metal or metal alloy exhibiting high electrical conductivity and low magnetic permeability, such as aluminum and copper.

3. An apparatus according to Claim 1, characterized in that said conveyor (7) comprises a plurality of substantially plate-like frames (8) structurally independent of one another and supported for sliding movement on guides (9,10) mounted longitudinally within said treatment tunnel (1), each frame (8) being provided with a plurality of said recesses (14) whose side wall (15) is formed from a metal or metal alloy exhibiting high electrical conductivity and low magnetic permeability, such as aluminum and copper.

4. An apparatus according to Claim 3, characterized in that said recesses (14) have an open bottom.

5. An apparatus according to Claim 4, characterized in that each frame (8) is formed with a plurality of apertures (16) laid regularly into rows lengthwise of the frame, said apertures (16) being surrounded peripherally by respective edge formations (17) attached to, and projecting from, said frame (8) and made of aluminum or some other metal or metal alloy exhibiting high electrical conductivity and low magnetic permeability.

6. An apparatus according to Claim 5, characterized in that said frames (8) are made of an electrically insulating material transparent to microwaves.

7. An apparatus according to Claim 5, characterized in that said frames (8) are made of aluminum or some other metal or metal alloy exhibiting high electrical conductivity and low magnetic permeability.

8. An apparatus according to Claim 7, characterized in that said frames (8) are provided peripherally with a ledge (8a) made of an electrically insulating material and adapted to bear on said slideway guides (8,9) supporting said frames (8).

9. An apparatus according to any of Claims 3 to 8, characterized in that it comprises pusher means (13) located at the inlet end of said treatment tunnel (1) effective to drive the frame (8) plurality through said tunnel (1).

## Patentansprüche

1. Vorrichtung zum thermischen Stabilisieren vorverpackter Lebensmittel-Artikel auf der Grundlage ununterbrochener Be handlung mittels Mikrowellen, welche Artikel in Behälter, die zumindest teilweise für Mikrowellen durchlässig sind, insbesondere Verpackungen des Schalen-Typs, eingeschlossen sind, wobei die Vorrichtung einen Mikrowellenbehandlungs-Tunnel (1) und eine Förder-Einrichtung (7) zum Durchlaufenlassen der Verpackungen durch den Tunnel (1) von einer Einlaßöffnung (2) zu einer Auslaßöffnung (3) desselben enthält, dadurch **gekennzeichnet**, daß die Förder-Einrichtung (7) eine Vielzahl von Vertiefungen (14) hat, die so geformt sind, daß sie an die Form der Verpackungen (19) angepaßt sind, und die eine Seitenwand (15) haben, welche aus einem Metall oder einer Metall-Legierung hergestellt ist, das bzw. die eine hohe elektrische Leitfähigkeit und eine niedrige magnetische Permeabilität, wie Aluminium und Kupfer, aufweist.

2. Vorrichtung nach Anspruch 1, dadurch **gekennzeichnet,** daß die Förder-Einrichtung (7) von der Art eines Endlos-Bandes ist, das mit einer Vielzahl von Öffnungen (16a) versehen ist, die regelmäßig in Reihen angeordnet sind, welche in Längsrichtung des Bandes verlaufen, wobei jede Öffnung (16a) um ihren Umfang herum von einem Randkörper (18) umgeben ist, der an dem Förder-Band (7) angebracht ist, aus diesem vorsteht und aus einem Metall oder einer Metall-Legierung hergestellt ist, das bzw. die eine hohe elektrische Leitfähigkeit und eine niedrige magnetische Permeabilität, wie Aluminium und Kupfer, aufweist.

3. Vorrichtung nach Anspruch 1, dadurch **gekennzeichnet,** daß die Förder-Einrichtung (7) aus einer Vielzahl von im wesentlichen tellerähnlichen Rahmen (8) besteht, die strukturmäßig unabhängig voneinander sind und zum zum Zwecke einer Gleitbewegung auf Führungen (9, 10) getragen werden, die innerhalb des Behandlungs-Tunnels (1) in Längssrichtung desselben montiert sind, wobei jeder Rahmen (8) mit einer Vielzahl der Vertiefungen (14) versehen ist, deren jeweilige Seitenwand (15) aus einem Metall oder einer Metall-Legierung gebildet ist, das bzw. die eine hohe elektrische Leitfähigkeit und eine niedrige magnetische Permeabilität, wie Aluminium und Kupfer, aufweist.

4. Vorrichtung nach Anspruch 3, dadurch **gekennzeichnet,** daß die Vertiefungen (14) einen offenen Boden haben.

5. Vorrichtung nach Anspruch 4, dadurch **gekennzeichnet,** daß jeder Rahmen (8) mit einer Vielzahl von Öffnungen (16) ausgebildet ist, die regelmäßig in Reihen in Längsrichtung des Rahmens angeordnet sind, wobei die Öffnungen (16) umfangsmäßig von betreffenden Randkörpern (17) umgeben sind, die an dem Rahmen (8) angebracht sind, von diesem vorstehen und aus Aluminium oder irgendeinem anderen Metall oder einer Metall-Legierung hergestellt sind, das bzw. die eine hohe elektrische Leitfähigkeit und eine niedrige magnetische Permeabilität aufweist.

6. Vorrichtung nach Anspruch 5, dadurch **gekennzeichnet,** daß die Rahmen (8) aus einem elektrisch isolierendem Material hergestellt sind, das für Mikrowellen durchlässig ist.

7. Vorrichtung nach Anspruch 5, dadurch **gekennzeichnet,** daß die Rahmen (8) aus Aluminium oder irgendeinem anderen Metall oder einer Metall-Legierung herge stellt sind, das bzw. die eine hohe elektrische Leitfähigkeit und eine niedrige magnetische Permeabilität aufweist.

8. Vorrichtung nach Anspruch 7, dadurch **gekennzeichnet,** daß die Rahmen (8) umfangsmäßig mit einem vorstehenden Rand (8a) versehen sind, der aus einem elektrisch isolierenden Material hergestellt ist und dazu bestimmt ist, auf den Gleitweg-Führungen (9, 10), die die Rahmen (8) tragen, zu lagern.

9. Vorrichtung nach einem der Ansprüche 3 bis 8, dadurch **gekennzeichnet,** daß sie eine Schiebe-Vorrichtung (13) umfaßt, die an dem Einlaßende des Behandlungs-Tunnels (1) angeordnet sind und wirksam sind, um die Vielzahl der Rahmen (8) durch den Tunnel (1) zu treiben.


**Revendications**

1. Appareil de stabilisation thermique, en continu, à l'aide de micro-ondes, d'articles alimentaires pré-emballés reçus de manière étanche dans un conteneur qui est au moins partiellement transparent aux micro-ondes, en particulier des emballages du type plateau, comportant un tunnel (1) de traitement aux micro-ondes et un convoyeur (7) destiné à faire passer les emballages à travers le tunnel (1) à partir d'un orifice d'entrée (2) vers un orifice de sortie (3) de ce dernier, caractérisé en ce que le convoyeur (7) possède plusieurs cavités (14) formées pour correspondre à la forme des emballages (19) et ayant une paroi latérale (15) en métal ou en alliage présentant une grande conductivité électrique et une faible perméabilité magnétique, tel que l'aluminium et le cuivre.

2. Appareil selon la revendication 1, caractérisé en ce que le convoyeur (7) est du type à courroie sans fin munie de plusieurs ouvertures (16a) agencées de manière régulière en rangées longitudinales sur la courroie, chaque ouverture (16a) ayant sa périphérie ceinturée par un organe (18) formant bord fixé à la courroie (7) de convoyeur et faisant saillie à l'extérieur de ce dernier, l'organe formant bord étant réalisé en métal ou alliage de métal présentant une grande conductivité électrique et une faible perméabilité magnétique, tel que l'aluminium et le cuivre.

3. Appareil selon la revendication 1, caractérisé en ce que le convoyeur (7) comporte plusieurs châssis sensiblement en forme de plaque (8) structurellement indépendant les uns des autres et supportés de manière à avoir un mouvement coulissant sur des guides (9, 10) montés longitudinalement dans le tunnel (1) de traitement, chaque châssis (8) étant pourvu de plusieurs desdites cavités (14) dont la paroi latérale (15) est formée d'un métal ou d'un alliage métallique présentant une grande conductivité électrique et une faible perméabilité magnétique, tel que l'aluminium et le cuivre.

4. Appareil selon la revendication 3, caractérisé en ce que les cavités (14) ont un fond ouvert.

5. Appareil selon la revendication 4, caractérisé en ce que chaque châssis (8) est formé de plusieurs ouvertures (16) régulièrement réparties en rangées sur la longueur du châssis, les ouvertures (16) étant entourées à leur périphérie par des organes (17) formant bords respectifs qui sont fixés au châssis (8) et font saillie à partir de celui-ci et sont réalisés en aluminium ou de tout autre métal ou alliage métallique présentant une grande conductivité électrique et une faible perméabilité magnétique.

6. Appareil selon la revendication 5, caractérisé en ce que les châssis (8) sont réalisés en un matériau isolant électriquement transparent aux micro-ondes.

8

7. Appareil selon la revendication 5, caractérisé en ce que les châssis (8) sont réalisés en aluminium ou tout autre alliage métallique présentant une grande conductivité électrique et une faible perméabilité magnétique.

8. Appareil selon la revendication 7, caractérisé en ce que les châssis (8) sont pourvus à leur périphérie d'un rebord (8a) réalisé en un matériau isolant électriquement et adapté pour être en appui sur les guides (9, 10) latéraux supportant les châssis (8).

9. Appareil selon l'une quelconque des revendications 3 à 8, caractérisé en ce qu'il comporte des moyens pousseurs (13) situés à l'extrémité d'entrée du tunnel (1) de traitement et adaptés pour entraîner la pluralité de châssis (8) à travers le tunnel (1).

FIG.1

FIG.2

FIG.3

FIG.3A

FIG.4

FIG.5

19

18